# EUROPEAN PATENT SPECIFICATION

(11) **EP 2 254 451 B1**
(45) Date of publication and mention of the grant of the patent: **13.07.2011**
(21) Application number: 08750943.6
(22) Date of filing: 09.05.2008
(51) Int. Cl.: A47J 31/40

(54) **BEVERAGE VENDING MACHINE**
GETRÄNKEVERKAUFSMASCHINE
DISTRIBUTEUR DE BOISSONS

(30) Priority: 04.02.2008 IT TO20080081
(43) Date of publication of application: 01.12.2010
(73) Proprietor: N&W Global Vending S.p.A., 24030 Valbrembo (Bergamo) (IT)
(72) Inventor: SIRBU VILLA, Dan, Alexie, 24040 Bonate Sotto (IT)
(74) Representative: Jorio, Paolo
(86) International application number: PCT/IB2008/001202
(87) International publication number: WO 2009/098535

(56) References cited:
- EP-A- 1 088 505
- WO-A-03/094681
- WO-A-2007/142519
- WO-A-2008/013452
- US-A- 5 952 032

## Description

### TECHNICAL FIELD

The present invention relates to a beverage vending machine.

The present invention is particularly advantageous for use in so-called "instant" hot and cold beverage vending machines, to which the following description refers purely by way of example.

### BACKGROUND ART

As is known, beverage vending machines of the above type normally comprise a cabinet or similar casing defining a compartment closed at the front by a door and housing a number of beverage-making assemblies. Document WO-03/094681 discloses a beverage vending machine.

Each assembly normally comprises one or more containers for respective soluble materials; and a mixer connected to the outlet of each of the relative containers, and to the outlet of a pressurized-water supply pump, and normally comprising a blending member normally defined by an impeller. In actual use, a measured quantity of soluble material and a measured quantity of pressurized water are fed to the mixer for mixing and blending into the desired beverage.

The space in which the mixers are housed is a critical part of the machine, where any leakage of liquid or powdered material may impair operation of the machine, and any contaminating material and/or climatic changes may impair beverage quality or clog the machine.

### DISCLOSURE OF INVENTION

It is an object of the present invention to provide a beverage vending machine that is cheap and easy to produce, is designed to prevent exposure of the mixers to external agents during operation, and, at the same time, allows easy access to the mixers for cleaning and maintenance.

According to the present invention, there is provided a beverage vending machine as claimed in Claim 1 and preferably in any one of the following Claims depending directly or indirectly on Claim 1.

### BRIEF DESCRIPTION OF THE DRAWINGS

A non-limiting embodiment of the present invention will be described by way of example with reference to the accompanying drawings, in which:
Figure 1 shows a view in perspective, with parts removed for clarity, of a preferred embodiment of the beverage vending machine according to the present invention;
Figure 2 shows a detail of Figure 1;
Figures 3 and 4 show axial sections of the Figure 2 detail in respective operating positions;
Figure 5 shows an exploded view of a detail in Figure 1;
Figures 6, 7, 8 show the Figure 5 detail in respective operating positions;
Figure 9 shows a larger-scale view, with parts removed for clarity, of the Figure 2 detail;
Figure 10 is similar to Figure 3, and shows a variation of the Figure 1 embodiment;
Figure 11 shows an exploded view of a detail of Figure 10;
Figure 12 shows a section along line XII-XII in Figure 3.

### BEST MODE FOR CARRYING OUT THE INVENTION

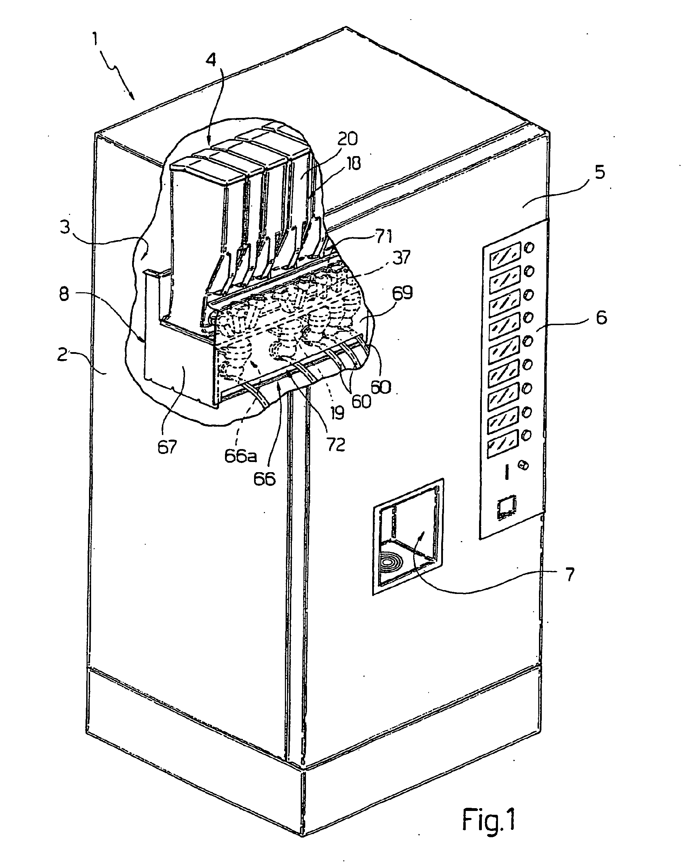

Number 1 in Figure 1 indicates as a whole a beverage vending machine, in particular for so-called "instant" hot and cold beverages made from a dose of soluble material.

Machine 1 comprises a cabinet 2 defining a compartment 3, which houses a number of beverage-making assemblies 4, and is closed at the front by a door 5 having a beverage selection panel 6, and a dispensing recess 7 from which the user removes a cup (not shown) of the selected beverage.

As shown in Figures 1 to 4, assemblies 4 are fitted to a frame 8 connected rigidly to cabinet 2 and comprising a vertical wall 9 facing a rear wall 9a of cabinet 2 and having a top edge and bottom edge bent squarely towards rear wall 9a of cabinet 2.

Frame 8 also comprises a horizontal wall 10, which is on a level with the bottom edge of vertical wall 9, is perpendicular to vertical wall 9, and is defined by a flat thin plate extending from vertical wall 9 towards door 5. Along its free edge facing door 5, horizontal wall 10 has an appendix 11 bent squarely downwards, and, along its opposite free edge, has an appendix 10a bent upwards and towards appendix 11.

Beneath horizontal wall 10, frame 8 comprises a rigid member 12 defined by two perpendicular sheet metal plates 13 and 14. Plate 13 is parallel to vertical wall 9, has a bent top edge connected integrally to an intermediate point of the underside surface of horizontal wall 10, and defines, on horizontal wall 10, an end portion 15 bounded at the front by appendix 11. Plate 14 is connected rigidly to a bottom edge of plate 13, is parallel to horizontal wall 10, extends from plate 13 towards door 5, and faces end portion 15 of horizontal wall 10.

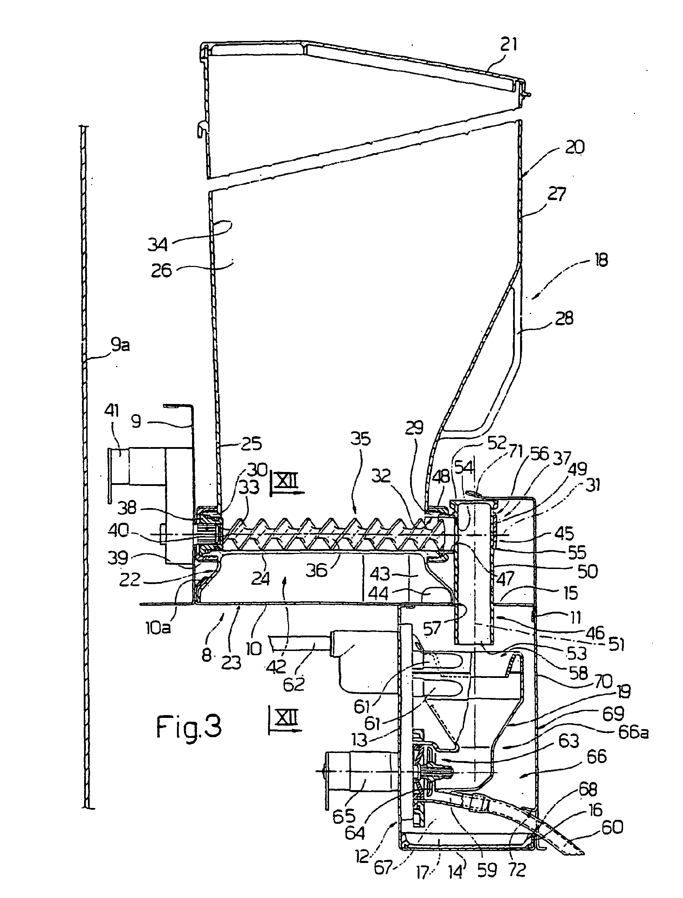

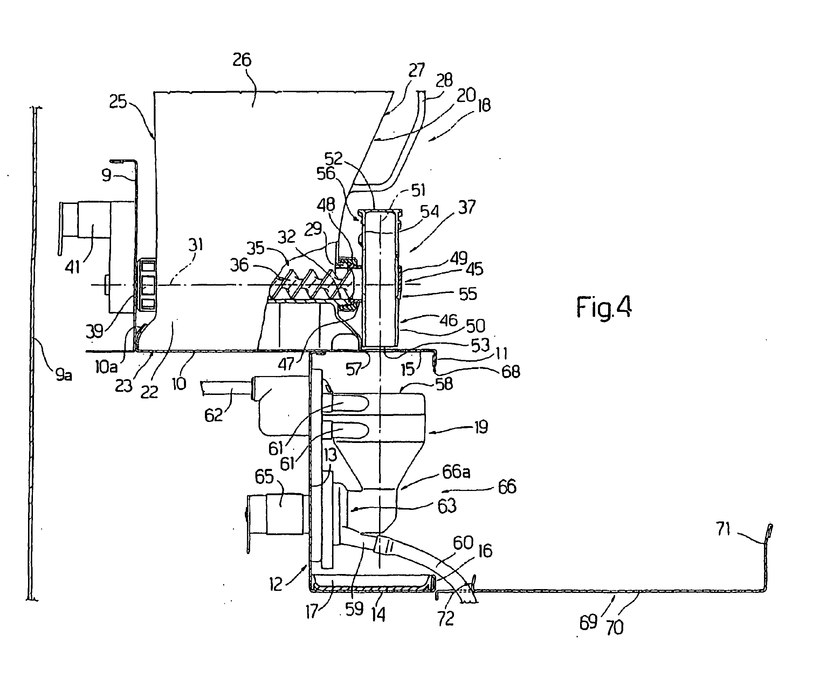

As shown in Figures 3 and 4, plate 14 is of the same transverse dimension as end portion 15 of horizontal wall 10, and has, along its free edge facing door 5, an appendix 16 which is bent squarely, with respect to plate 14, towards appendix 11, is coplanar with appendix 11, and defines, together with plate 14 and a bottom portion of plate 13, a seat for a removable tray 17.

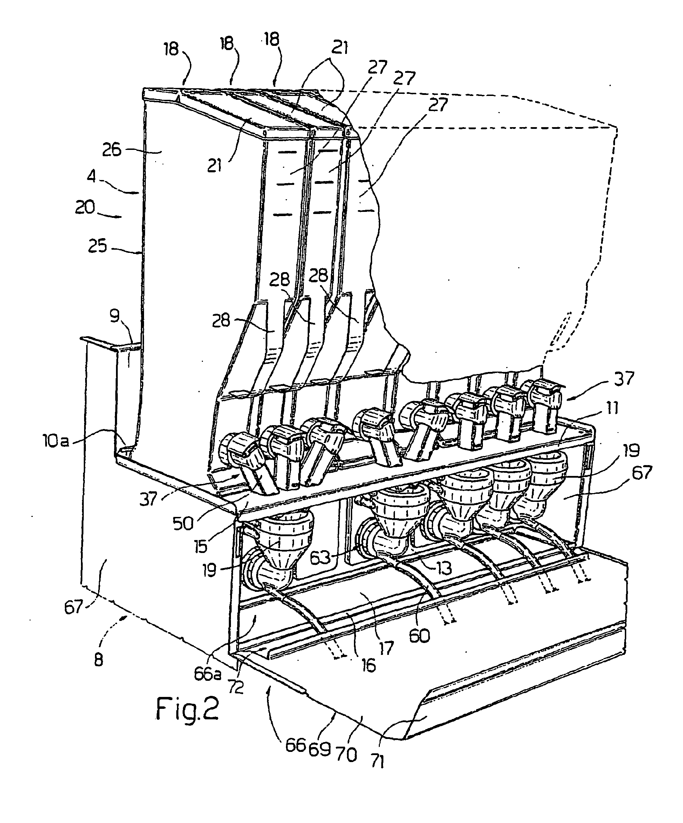

As shown in Figures 2 and 3, each assembly 4 fitted to frame 8 comprises at least one container 18 for containing and dispensing, in use, a measured quantity of soluble material; and a mixer 19 for receiving the soluble material from relative container/s 18 and mixing and blending the material with a measured quantity of pressurized water.

More specifically, Figure 2 shows five side by side assemblies 4, of which the first three assemblies 4, from right to left, each comprise one container 18, the fourth assembly 4 comprises two containers 18, and the fifth assembly 4 comprises three containers 18.

As shown more clearly in Figure 3, each container 18 comprises a tank 20 for housing the soluble material and closed at the top by a removable cover 21, and at the bottom by a cup-shaped, downward-facing base 22. Base 22 is bounded at the bottom by an edge 23 supporting container 18 on horizontal wall 10, and is bounded at the top by a wall 24 defining the bottom of tank 20.

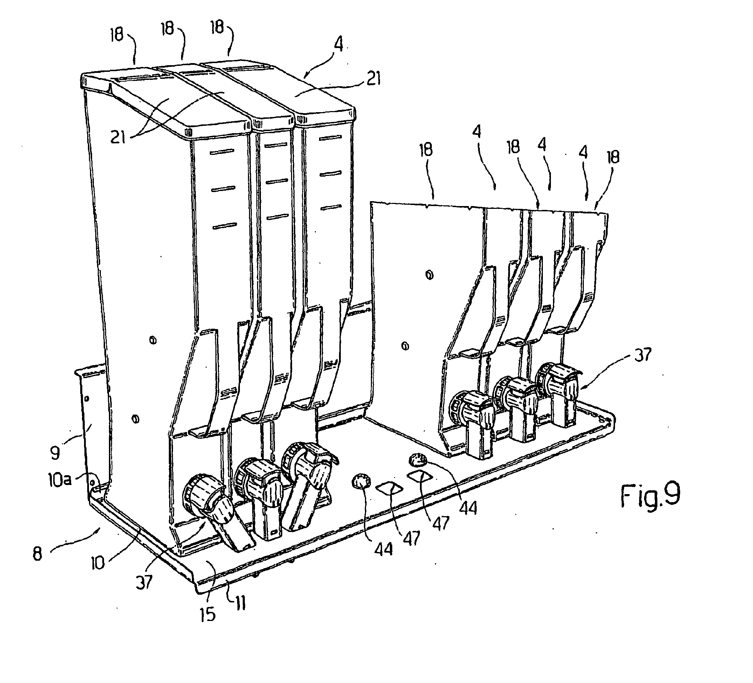

As shown in Figures 2 and 9, each tank 20 is the same height and the same length, measured crosswise to horizontal wall 10, as all the other tanks 20, and is of a width equal to or differing from the width of the other tanks 20 and defining the capacity of tank 20. This design of tanks 20 enables them to be positioned side by side and contacting one another on horizontal wall 10, and imparts a highly compact, versatile, modular structure to tanks 20 as a whole.

Each tank 20 has a substantially rectangular cross section, and, as shown more clearly in Figure 3, is bounded laterally by a vertical rear wall 25; two vertical major lateral walls 26 (only one shown in Figure 3) parallel to each other and perpendicular to rear wall 25; and a front wall 27 substantially parallel to rear wall 25 and fitted with a handle 28 by which to handle container 18 for refilling and maintenance.

Just above wall 24, front wall 27 and rear wall 25 have respective externally threaded, tubular appendixes 29 and 30, which are coaxial along a horizontal axis 31 perpendicular to rear wall 25 and parallel to wall 24, project outwards of front wall 27 and rear wall 25 respectively, and define respective conduits 32 and 33 connecting an inner cavity 34 of tank 20 with the outside.

In addition to tank 20, container 18 also comprises a dispensing device 35 which, in use, extracts measured quantities of material from cavity 34 along conduit 32, and comprises a screw 36 housed inside cavity 34.

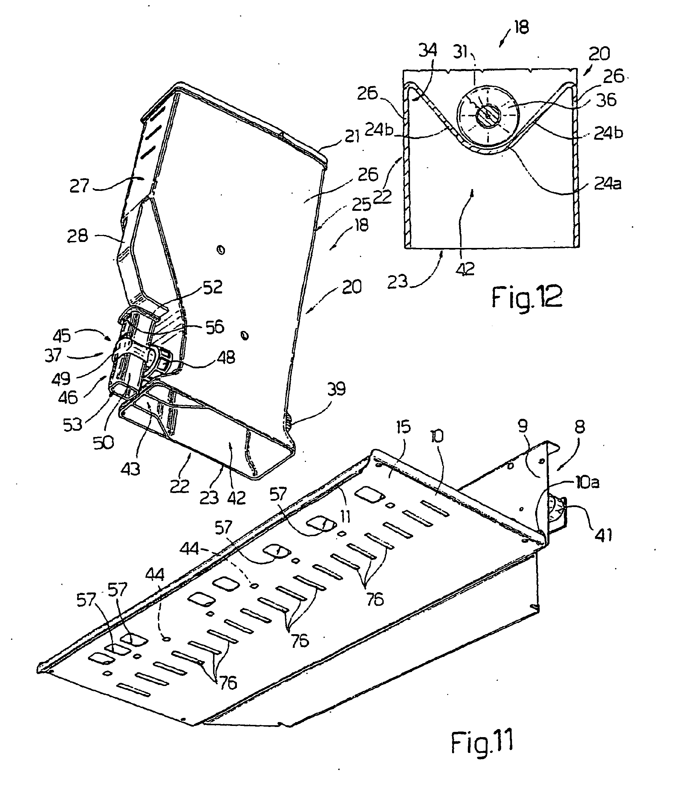

As shown in Figure 12, screw 36 is housed movably, inside cavity 34, in a substantially semicylindrical seat coaxial with axis 31, defined by a curved portion 24a of wall 24, and connected to lateral walls 26 by two sloping portions 24b.

Container 18 also comprises a spout 37 located outside cavity 34, connected to tubular appendix 29, and fitted to and projecting from front wall 27 of tank 20.

Screw 36 is defined by a double-thread screw coaxial with axis 31 and connected for rotation to tubular appendixes 29 and 30. More specifically, a front end of screw 36 engages conduit 32 of tubular appendix 29 in rotary manner, and a rear end of screw 36 is fitted integrally with a cup-shaped body 38, which is coaxial with axis 31, is knurled axially inside, engages tubular appendix 30 in rotary manner to fluidtight seal conduit 33, and has, on its free end, an outer annular flange located outside tubular appendix 30 and held axially contacting an outer free edge of tubular appendix 30 by a ring nut 39 screwed onto tubular appendix 30.

Cup-shaped body 38 defines a known fast-fit face coupling for connecting screw 36 to an axially knurled output shaft 40 of a respective electric motor 41.

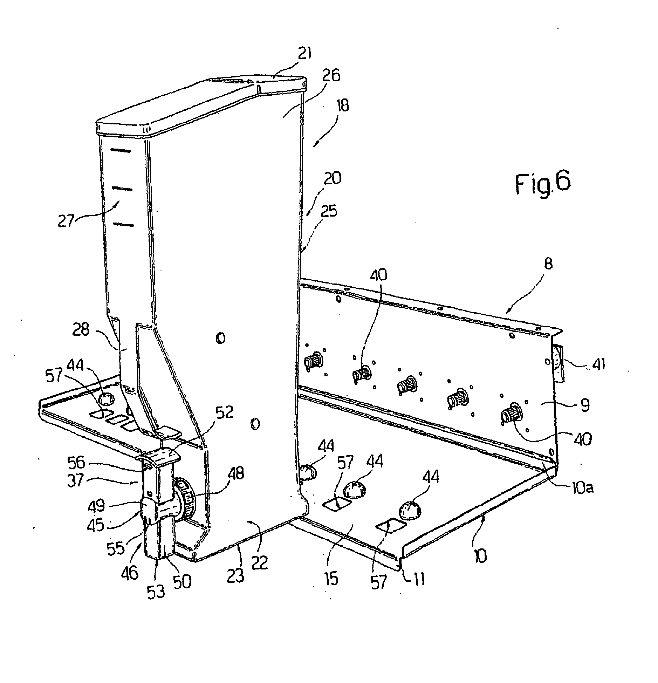

Electric motors 41 of all of containers 18 (Figure 6) are fitted to vertical wall 9, in the space between vertical wall 9 and the rear wall (not shown) of compartment 3, and are arranged side by side along vertical wall 9; and respective output shafts 40 extend through vertical wall 9 and, in use, are coaxial with axes 31 of relative containers 18.

For fast connection of cup-shaped body 38 of each screw 36 to output shaft 40 of relative electric motor 41, the cup-shaped base 22 of each tank 20 defines an open-bottomed cavity 42 shaped internally to define, close to front wall 27, a straight guide 43 perpendicular to its own front and rear walls 27, 25, and which is engaged in sliding manner by a respective hemispherical guide body 44 fitted to horizontal wall 10 and aligned with output shaft 40 of relative electric motor 41.

In the work position, each tank 20 rests on horizontal wall 10, with its straight guide engaged by respective guide body 44, with its cup-shaped body 38 engaged by shaft 40 of respective electric motor 41, and with a shaped rear portion of respective cup-shaped base 22 engaged beneath appendix 10a, which, together with the shaft 40/cup-shaped body 38 connection, acts as a stabilizing device to keep tank 20 upright.

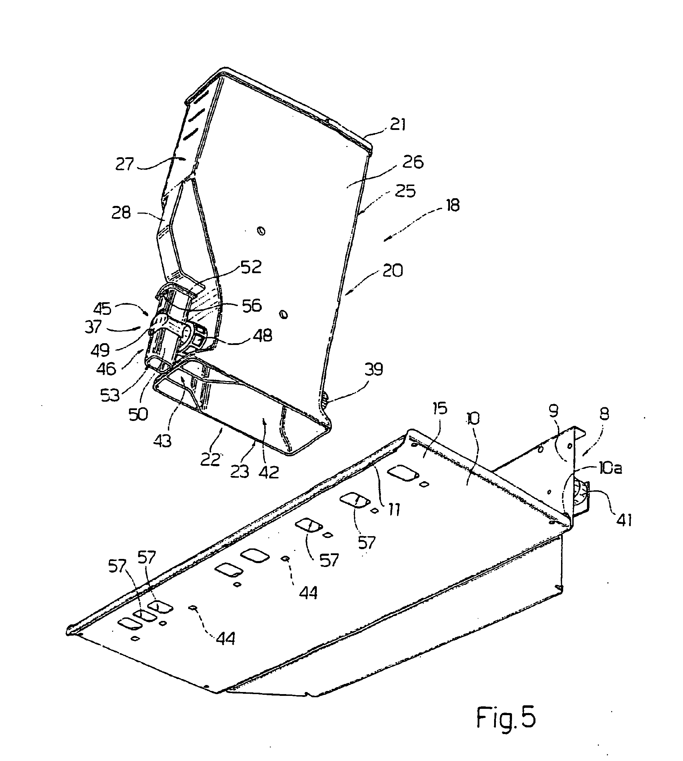

Conduit 32 of tubular appendix 29 defines an outlet of tank 20, and tubular appendix 29 defines a connection for spout 37, which comprises a connecting body 45 for connection to tank 20, and a dispensing body 46. Dispensing body 46 is fitted to connecting body 45, and is movable, with respect to connecting body 45, between an open dispensing position (Figures 1-3 and 8 and 9), in which dispensing body 46 connects conduit 32 to the outside to permit outflow of the material from cavity 34 when screw 36 is operated, and a closed position (Figures 4-6), in which dispensing body 46 disconnects conduit 32 from the outside.

Connecting body 45 comprises a sleeve 47, a free end portion of which engages conduit 32, to which sleeve 47 is connected in rotary and axially fixed manner by a ring nut 48.

At the end opposite the portion inserted inside conduit 32, sleeve 47 is fitted with an annular appendix 49 of substantially rectangular cross section.

Dispensing body 46 comprises a tubular body 50, which has an axis 51 perpendicular to axis 31, engages appendix 49 in sliding and angularly fixed manner, and has a top axial end closed by a plate 52 crosswise to axis 31 and in the form of an arc coaxial with axis 31.

Tubular body 50 has an outlet 53 at the bottom axial end of tubular body 50; and an inlet 54 formed through the side of tubular body 50, close to plate 52 and on the side facing tank 20, and having a flow section roughly equal to the cross section of sleeve 47.

Tubular body 50 can be set selectively to a lowered position corresponding to said open dispensing position (Figures 1-3 and 8 and 9) and in which inlet 54 is coaxial with axis 31 and faces conduit 32; and a raised position corresponding to said closed position (Figures 4-7) and in which inlet 54 is raised with respect to conduit 32, which is thus disconnected from the outside by the lateral wall of tubular body 50.

Dispensing body 46 has a lock device 55 for clicking tubular body 50 selectively into the open dispensing position and the closed position. Lock device 55 is defined by a flexible tooth on annular appendix 49, and by two notches formed on the outer surface of tubular body 50 and into which the flexible tooth clicks selectively. Dispensing body 46 also comprises a stop device 56 defined by two tabs projecting radially from tubular body 50, and which rest on a top edge of annular appendix 49 when tubular body 50 is lowered by the operator into the open dispensing position.

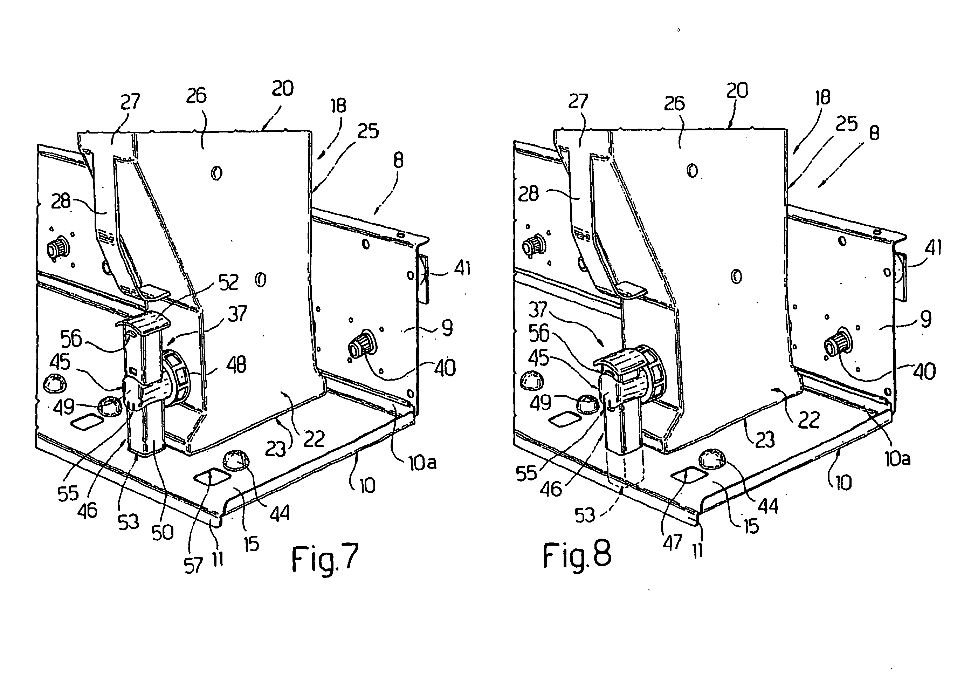

As shown in Figures 3 and 8, when dispensing body 46 is set to the open dispensing position, tubular body 50 extends through a respective passage 57 formed through end portion 15 of wall 10. Passage 57 is located with its axis at the same distance from vertical wall 9 as axis 51 from the rear end of ring nut 39, so that, when container 18 is in the work position on horizontal wall 10, the axis of passage 57 lies in the plane in which axis 51 moves about axis 31, and passage 57 can be engaged by tubular body 50, which, when inserted through passage 57, is positioned with its outlet 53 facing a top inlet 58 of relative mixer 19.

As shown in Figures 4 and 7, when dispensing body 46 is set to the closed position, the whole of tubular body 50 is located above horizontal wall 10, and tank 20, if necessary, can be removed from horizontal wall 10 safely with no spillage.

Each mixer 19 is fitted to plate 13, and comprises a funnel-shaped body positioned with its inlet 58 facing end portion 15 of horizontal wall 10. At its narrow bottom end, mixer 19 has a beverage outflow pipe 59 communicating with the outside by a dispensing hose 60. Close to inlet 58, mixer 19 has two water inlets 61 communicating with the outlet of a pump (not shown) to supply mixer 19, in use, with pressurized water to dissolve the soluble material supplied to mixer 19 and so produce the relative beverage. Above inlets 61, mixer 19 has a steam suction pipe 62. Along outflow pipe 59, mixer 19 comprises a beverage blending device 63 in turn comprising an impeller 64 powered by an electric motor 65 fitted to plate 13, on the opposite side to mixer 19.

As shown in Figure 2, in the case of assemblies 4 with more than one container 18, mixer 19 is positioned substantially centrally with respect to relative containers 18, and passages 57 engaged by respective spouts 37 are formed close to one another through portion 15 and facing inlet 58 of mixer 19. The position of passages 57 therefore also determines the tilt angle tubular bodies 50 of spouts 37 must assume, in the open dispensing position, with respect to horizontal wall 10, to permit insertion of the tubular bodies through respective passages 57.

As shown in Figures 2 and 3, mixers 19 of assemblies 4 are housed side by side inside a cell 66 defined by plates 13 and 14, by two lateral walls 67 of frame 8, and by end portion 15 of horizontal wall 10, and having an opening 68 facing door 5 and closed by a hatch 69.

Depending on the transverse dimensions of machine 1, both or only one of lateral walls 67 of frame 8 may be positioned contacting, or coincide with, the lateral walls of cabinet 2.

More specifically, with reference to Figures 2 to 4, hatch 69 is defined by a flat rectangular plate 70 which, along one long side, has an appendix 71 bent squarely with respect to plate 70 and of a width substantially equal to the distance between appendix 11 of horizontal wall 10 and a plane defined by the axes of passages 57. Along the opposite side to that with appendix 71, plate 70 is hinged to a free edge of plate 14 to rotate in use between a horizontal open position (Figure 4), in which plate 70 is coplanar with plate 14, fully opens opening 68, and is supported by lateral ties (not shown) interposed between plate 70 and lateral walls 67, and a vertical closed position (Figure 3), in which plate 70 rests against appendix 11 of portion 15 and appendix 16 of plate 14 to completely close opening 68, and appendix 71 is positioned horizontally directly over plate/s 52 of dispensing body/bodies 46.

Close to the hinged side, plate 70 has a slot 72 parallel to appendix 71 and through which respective hoses 60 of mixers 19 extend out of cell 66 to feed the relative beverages into a container (not shown) inside dispensing recess 7 of machine 1.

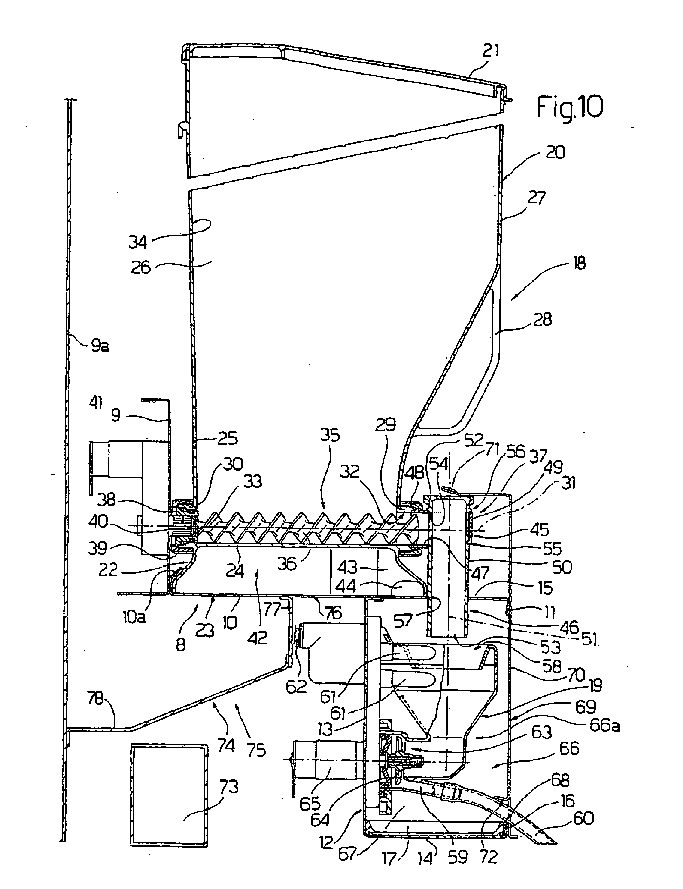

Figures 10 and 11 show a variation of machine 1, in the event machine 1 - as is usually the case, for producing hot beverages - comprises a boiler 73 housed inside compartment 3, beneath wall 10 and behind cell 66.

In this case, machine 1 may comprise an air-conditioning system, which uses the heat given off by boiler 73 to heat the area occupied by containers 18 and prevent the soluble material inside tanks 20 from forming lumps, on account of the inevitable moisture in this area.

As shown in Figure 10, the air-conditioning system is defined by a partition 74, which extends from one lateral wall 67 to the other and from rear wall 9a of machine 1 to horizontal wall 10 to define, together with lateral walls 67, a flue 75 located over boiler 73 and opening at the top through a number of slots 76 (Figure 11) formed through horizontal wall 10, behind plate 13, and extending parallel to axis 31.

The heat given off by boiler 73 and conducted by flue 75 to horizontal wall 10 thus flows through slots 76 in horizontal wall 10 into cavities 42 defined by relative cup-shaped bases 22 of tanks 20. In this connection, it should be pointed out that the particular design of bottom wall 24 of each tank 20 (Figure 12) allows the heat to penetrate between relative portion 24a and relative lateral walls 24b and so advantageously heat the area about screw 36, where the soluble material is compressed and so has a greater tendency to form into lumps.

More specifically, in the Figure 10 example, partition 74 comprises a vertical sheet metal plate 77 connected rigidly to wall 10 and facing plate 13; and a V-bent sheet metal plate 78 connected rigidly at the top end to plate 77, and at the opposite end to rear wall 9a of machine 1.

In actual use, spouts 37 are set to the open dispensing position, and cell 66 is closed to separate a housing 66a, housing mixers 19, from the rest of compartment 3. As such, cell 66 protects the rest of compartment 3 of machine 1 from the dust formed as the soluble material is dispensed to mixers 19; creates about mixers 19 a constant microclimate with no sharp variations in temperature or moisture; and, at the same time, ensures any liquid particles escaping from mixers 19 are confined within housing 66a and at least partly collected in tray 17, thus enabling faster, more effective cleaning of cell 66 and compartment 3.

To clean and refill tanks 20, the operator opens hatch 69 into the horizontal open position, withdraws tubular bodies 50 from cell 66 through relative passages 57 into the closed position, and removes containers 18 off horizontal wall 10. Once containers 18 are detached, the temporary supporting surface defined by the open hatch 69 may conveniently be used by the operator to fill tanks 20. Hatch 69 also allows the operator easy access to housing 66a of mixers 19 for cleaning purposes.

Once cleaning and/or filling is completed and containers 18 are replaced on horizontal wall 10, tubular bodies 50 are reset to the open dispensing position, and hatch 69 is closed.

In this connection, it should be pointed out that appendix 71 also acts as a safety device, by preventing hatch 69 from being closed if even only one of tubular bodies 50 is not set to the open dispensing position. Given the curved shape of plates 52, this safety function is performed by appendix 71 regardless of the tilt angle assumed in use by tubular bodies 50 about relative axes 31.

In connection with the microclimate produced by cell 66 about mixers 19, it should be pointed out that, in variations not shown, housing 66a of cell 66 may easily be heated or cooled, depending on whether machine 1 is used for making hot or cold beverages. In the event some of mixers 19 are used for making cold beverages, and others for making hot beverages, housing 66a of cell 66 may easily be compartmentalized by means of partitions perpendicular to plate 13, and some of the resulting compartments cooled, and others heated.

## Claims

1. A beverage vending machine comprising a cabinet (2) defining a compartment (3); and at least one beverage-making assembly (4) housed inside the compartment (3); the assembly (4) comprising at least one container (18) for soluble material, and a mixer (19) mounted in a fixed position inside the compartment (3) and which, in use, receives a measured quantity of said material and a measured quantity of pressurized water to produce a beverage; the machine (1) being **characterized by** also comprising a cell (66) housed inside the compartment (3) and defining a housing (66a) for the mixer (19); the cell (66) comprising a fixed frame (8) fitted integrally with the mixer (19), an opening (68) for access to the housing (66a) and to the mixer (19), and a hatch (69) closing the opening (68).

2. A machine as claimed in Claim 1, and comprising a door (5) closing the compartment (3); the opening (68) of the cell (66) facing the door (5).

3. A machine as claimed in Claim 1 or 2, wherein the hatch (69) is movable between a closed position and an open position; the open position being a substantially horizontal position.

4. A machine as claimed in one of the foregoing Claims, wherein the hatch (69) is mounted to rotate between the open position and the closed position about an axis located along a bottom edge of the opening (68).

5. A machine as claimed in Claim 4, wherein, crosswise to its axis of rotation, the hatch (69) is sized to define, in the open position, a temporary supporting surface for the container (18).

6. A machine as claimed in one of the foregoing Claims, wherein the cell (66) comprises a top wall (10) defining a supporting surface for the container (18).

7. A machine as claimed in one of the foregoing Claims, wherein the mixer (19) has an upward-facing inlet (58) for the material; and the container (18) is fitted with a spout (37) having a tubular dispensing portion (50) extending down to the inlet (58) to feed the material to the mixer (19); the cell (66) comprising a top wall (15) facing the inlet (58) and having a passage (57) for said tubular dispensing portion (50).

8. A machine as claimed in Claim 7, wherein the tubular dispensing portion (50) is movable through the passage (57) between a raised rest position and a lowered work position; the cell (66) having safety means (71) for only allowing closure of the hatch (69) when the tubular dispensing portion (50) is in the lowered work position.

9. A machine as claimed in Claim 8, wherein said safety means (71) are on the hatch (69).

10. A machine as claimed in Claim 8 or 9, wherein the hatch (69) has a first edge hinged to a bottom edge of the opening (68), and a second edge opposite the first edge and located over the top wall (15) of the cell (66) when the hatch (69) is in the closed position; said safety means (71) being defined by an appendix (71), which is connected to the second edge, extends squarely with respect to the rest of the hatch (69), and, when the hatch (69) is in the closed position, is positioned facing the passage (57) to prevent movement of the tubular dispensing portion (50) into the raised rest position.

11. A machine as claimed in Claim 10, wherein the tubular dispensing portion (50) is bounded at the top by a curved plate (52) which cooperates with said safety means (71).

12. A machine as claimed in one of the foregoing Claims, wherein the mixer (19) has a beverage outflow pipe (59); the cell (66) having a slot (72) for passage of the outflow pipe (59) to the outside.

13. A machine as claimed in Claim 12, wherein the slot (72) is formed through the hatch (69).

14. A machine as claimed in Claims 11 and 13, wherein the slot (72) extends along the first edge of the hatch (69).

15. A machine as claimed in one of the foregoing Claims, and comprising a number of assemblies (4); the housing (66a) being sized to accommodate all the mixers (19) in a fixed position, and allowing access to all the mixers (19) through the opening (68).

16. A machine as claimed in Claim 6 and comprising a heating device (73), and conveying means (75, 76) for conveying the heat produced by the heating device (73) to and through the top wall (10).

17. A machine as claimed in Claim 16, wherein the heating device (73) is located below the cell (66), and the conveying means (75, 76) comprise a flue (75) extending from the heating device (73) to the top wall (10), and a number of openings (76) formed, at the top of the flue (75), through the top wall (10) to allow the heat to flow through the top wall (10) to the container (18).

18. A machine as claimed in Claim 16 or 17, wherein the heating device (73) comprises a boiler for heating infusion water.

## Patentansprüche

1. Getränkeverkaufsmaschine umfassend einen Kasten (2), der eine Kammer (3) definiert; sowie mindestens eine Baugruppe (4) zur Herstellung von Getränken, die innerhalb der Kammer (3) untergebracht ist; wobei die Baugruppe (4) mindestens einen Behälter (18) für lösliches Material umfasst, sowie einen Mischer (19), der in einer festgelegten Stellung innerhalb der Kammer (3) angebracht ist und welcher bei Gebrauch eine abgemessene Menge von dem Material und eine abgemessene Menge von druckbeaufschlagtem Wasser erhält, um ein Getränk herzustellen; wobei die Maschine (1) **dadurch gekennzeichnet ist, dass** sie auch eine Zelle (66) umfasst, die innerhalb der Kammer (3) untergebracht ist und ein Gehäuse (66a) für den Mischer (19) definiert; wobei die Zelle (66) einen festen Rahmen (8), der einstückig mit dem Mischer (19) angebracht ist, eine Öffnung (68) für den Zugang zu dem Gehäuse (66a) und zu dem Mischer (19) und einen die Öffnung (68) verschließenden Deckel (69) umfasst.

2. Maschine gemäß Anspruch 1 und umfassend eine die Kammer (3) verschließende Tür (5); wobei die Öffnung (68) der Zelle (66) der Tür (5) zugewandt ist.

3. Maschine gemäß Anspruch 1 oder 2, wobei der Deckel (69) zwischen einer geschlossenen Stellung und einer offenen Stellung bewegbar ist; wobei die offene Stellung eine im wesentlichen horizontale Stellung ist.

4. Maschine gemäß einem der vorhergehenden Ansprüche, wobei der Deckel (69) so gelagert ist, dass er sich um eine längs der Unterkante der Öffnung (68) befindliche Achse herum zwischen der offenen Stellung und der geschlossenen Stellung dreht.

5. Maschine gemäß Anspruch 4, wobei der Deckel (69) ausgelegt ist, quer zu seiner Drehachse in der offenen Stellung eine zeitweilige Tragefläche für den Behälter (18) zu definieren.

6. Maschine gemäß einem der vorhergehenden Ansprüche, wobei die Zelle (66) eine obere Wand (10) umfasst, die eine Tragefläche für den Behälter (18) definiert.

7. Maschine gemäß einem der vorhergehenden Ansprüche, wobei der Mischer (19) einen nach oben gewandten Einlass (58) für das Material hat; und der Behälter (18) mit einem Ausflusselement (37) versehen ist, das einen röhrenförmigen Spenderabschnitt (50) aufweist, der sich hinunter zu dem Einlass (58) erstreckt, um das Material in den Mischer (19) einzuspeisen; wobei die Zelle (66) eine dem Einlass (58) zugewandte obere Wand (15) umfasst, die einen Durchgang (57) für den röhrenförmigen Spenderabschnitt (50) aufweist.

8. Maschine gemäß Anspruch 7, wobei der röhrenförmige Spenderabschnitt (50) durch den Durchgang (57) hindurch zwischen einer angehobenen Ruhestellung und einer abgesenkten Arbeitsstellung bewegbar ist; wobei die Zelle (66) Sicherheitsmittel (71) aufweist, um Schließen des Deckels (69) lediglich dann zu ermöglichen, wenn der röhrenförmige Spenderabschnitt (50) in der abgesenkten Arbeitsstellung ist.

9. Maschine gemäß Anspruch 8, wobei die Sicherheitsmittel (71) auf dem Deckel (69) sind.

10. Maschine gemäß Anspruch 8 oder 9, wobei der Deckel (69) eine an einer Unterkante der Öffnung (68) angelenkte erste Kante aufweist, sowie eine zweite Kante gegenüber der ersten Kante und befindlich über der oberen Wand (15) der Zelle (66), wenn der Deckel (69) in der geschlossenen Stellung ist; wobei die Sicherheitsmittel (71) durch einen Fortsatz (71) definiert sind, welcher mit der zweiten Kante verbunden ist, sich in Bezug auf die Auflage des Deckels (69) im Winkel erstreckt und dem Durchgang (57) zugewandt positioniert ist, wenn der Deckel (69) in der geschlossenen Stellung ist, um Bewegung des röhrenförmigen Spenderabschnitts (50) in die angehobene Ruhestellung zu verhindern.

11. Maschine gemäß Anspruch 10, wobei der röhrenförmige Spenderabschnitt (50) oben durch eine gekrümmte Platte (52) begrenzt ist, welche mit den Sicherheitsmitteln (71) zusammenwirkt.

12. Maschine gemäß einem der vorhergehenden Ansprüche, wobei der Mischer (19) ein Getränkeausflussrohr (59) aufweist; wobei die Zelle (66) eine Ausnehmung (72) für den Durchgang des Ausflussrohrs (59) nach Außen hat.

13. Maschine gemäß Anspruch 12, wobei die Ausnehmung (72) durch den Deckel (69) hindurch ausgebildet ist.

14. Maschine gemäß den Ansprüchen 11 und 13, wobei die Ausnehmung (72) sich längs der ersten Kante des Deckels (69) erstreckt.

15. Maschine gemäß einem der vorhergehenden Ansprüche und umfassend eine Anzahl von Baugruppen (4); wobei das Gehäuse (68a) dimensioniert ist, sämtliche Mischer (19) in einer festgelegten Stellung aufzunehmen und Zugang zu sämtlichen Mischern (19) durch die Öffnung (68) hindurch zu ermöglichen.

16. Maschine gemäß Anspruch 6 und umfassend eine Erwärmungsvorrichtung (73) und Fördermittel (75, 76) zum Befördern der durch die Erwärmungsvorrichtung (73) erzeugten Wärme zu der oberen Wand (10) und durch diese hindurch.

17. Maschine gemäß Anspruch 16, wobei die Erwärmungsvorrichtung (73) sich unterhalb der Zelle (66) befindet, und die Fördermittel (75, 76) einen sich von der Erwärmungsvorrichtung (73) zu der oberen Wand erstreckenden Heizkanal (75) sowie einen Anzahl von Öffnungen (76) umfassen, die an der Oberseite des Heizkanals (75) durch die obere Wand (10) hindurch ausgebildet sind, um die Wärme durch die obere Wand (10) hindurch zu dem Behälter (18) strömen zu lassen.

18. Maschine gemäß Anspruch 16 oder 17, wobei die Erwärmungsvorrichtung (73) einen Siedekessel zum Erwärmen von Aufgusswasser umfasst.

## Revendications

1. Distributeur de boissons comprenant une armoire (2) définissant un compartiment (3) ; et au moins un ensemble de préparation de boissons (4) logé à l'intérieur du compartiment (3) ; l'ensemble (4) comprenant au moins un conteneur (18) pour un matériau soluble, et un mélangeur (19) monté dans une position fixe à l'intérieur du compartiment (3) et qui, à l'utilisation, reçoit une quantité mesurée dudit matériau et une quantité mesurée d'eau sous pression pour produire une boisson ; le distributeur (1) étant **caractérisé en ce qu'**il comprend également une cellule (66) logée à l'intérieur du compartiment (3) et définissant un logement (66a) pour le mélangeur (19) ; la cellule (66) comprenant un cadre fixe (8) monté d'un seul tenant avec le mélangeur (19), une ouverture (68) pour accéder au logement (66a) et au mélangeur (19), et une trappe (69) qui ferme l'ouverture (68).

2. Distributeur selon la revendication 1, comprenant une porte (5) qui ferme le compartiment (3) ; l'ouverture (68) de la cellule (66) faisant face à la porte (5).

3. Distributeur selon la revendication 1 ou 2, dans lequel la trappe (69) peut se déplacer entre une position fermée et une position ouverte ; la position ouverte étant une position sensiblement horizontale.

4. Distributeur selon l'une quelconque des revendications précédentes, dans lequel la trappe (69) est montée de sorte à tourner entre la position ouverte et la position fermée autour d'un axe situé le long d'un bord inférieur de l'ouverture (68).

5. Distributeur selon la revendication 4, dans lequel, dans le sens transversal par rapport à son axe de rotation, la trappe (69) est dimensionnée de sorte à définir, dans la position ouverte, une surface de support temporaire pour le conteneur (18).

6. Distributeur selon l'une quelconque des revendications précédentes, dans lequel la cellule (66) comprend une paroi supérieure (10) définissant une surface de support pour le conteneur (18).

7. Distributeur selon l'une quelconque des revendications précédentes, dans lequel le mélangeur (19) comprend un orifice d'entrée dirigé vers le haut (58) pour le matériau ; et le conteneur (18) est muni d'un bec verseur (37) ayant une partie de distribution tubulaire (50) s'étendant dans la direction descendante vers l'orifice d'entrée (58) de sorte à amener le matériau jusqu'au mélangeur (19) ; la cellule (66) comprenant une paroi supérieure (15) faisant face à l'orifice d'entrée (58) et comprenant un conduit (57) pour ladite partie de distribution tubulaire (50).

8. Distributeur selon la revendication 7, dans lequel la partie de distribution tubulaire (50) peut se déplacer à travers le conduit (57) entre une position de repos relevée et une position de fonctionnement abaissée ; la cellule (66) comprenant des moyens de sécurité (71) pour permettre la fermeture de la trappe (69) lorsque la partie de distribution tubulaire (50) est dans la position de fonctionnement abaissée.

9. Distributeur selon la revendication 8, dans lequel lesdits moyens de sécurité (71) se trouvent sur la trappe (69).

10. Distributeur selon la revendication 8 ou 9, dans lequel la trappe (69) comprend un premier bord relié par charnière à un bord inférieur de l'ouverture (68), et comprend un second bord opposé au premier bord et placé en dessus de la paroi supérieure (15) de la cellule (66) lorsque la trappe (69) est dans la position fermée ; lesdits moyens de sécurité (71) étant définis par un appendice (71), qui est relié au second bord, qui s'étend à angle droit par rapport au reste de la trappe (69) et qui, lorsque la trappe (69) est dans la position fermée, est disposé en face du conduit (57) de sorte à empêcher tout déplacement de la partie de distribution tubulaire (50) à l'intérieur de la position de repos relevée.

11. Distributeur selon la revendication 10, dans lequel la partie de distribution tubulaire (50) est raccordée à la partie supérieure par une plaque courbe (52) qui coopère avec lesdits moyens de sécurité (71).

12. Distributeur selon l'une quelconque des revendications précédentes, dans lequel le mélangeur (19) comprend un tuyau d'écoulement de boisson en sortie (59) ; la cellule (66) comprenant une fente (72) pour le passage du tuyau d'écoulement en sortie (59) vers l'extérieur.

13. Distributeur selon la revendication 12, dans lequel la fente (72) est formée à travers la trappe (69).

14. Distributeur selon les revendications 11 et 13, dans lequel la fente (72) s'étend le long du premier bord de la trappe (69).

15. Distributeur selon l'une quelconque des revendications précédentes, comprenant un certain nombre d'ensembles (4) ; le logement (66a) étant dimensionné de sorte à recevoir tous les mélangeurs (19) dans une position fixe, et permettant d'accéder à tous les mélangeurs (19) à travers l'ouverture (68).

16. Distributeur selon la revendication 6 et comprenant un dispositif de réchauffage (73), et des moyens de transfert (75, 76) pour transférer la chaleur produite par le dispositif de réchauffage (73) vers et à travers la paroi supérieure (10).

17. Distributeur selon la revendication 16, dans lequel le dispositif de réchauffage (73) est placé en dessous de la cellule (66), et les moyens de transfert (75, 76) comprennent un tube foyer (75) s'étendant du dispositif de réchauffage (73) à la paroi supérieure (10), et un certain nombre d'ouvertures (76) formées, sur le dessus du tube foyer (75), à travers la paroi supérieure (10) pour permettre à la chaleur de circuler à travers la paroi supérieure (10) jusqu'au conteneur (18).

18. Distributeur selon la revendication 16 ou 17, dans lequel le dispositif de réchauffage (73) comprend une chaudière pour chauffer de l'eau pour des infusions.
